# EUROPÄISCHE PATENTSCHRIFT

(11) **EP 3 205 532 B1**
(45) Veröffentlichungstag und Bekanntmachung des Hinweises auf die Patenterteilung: **07.11.2018**
(21) Anmeldenummer: 16203659.4
(22) Anmeldetag: 13.12.2016
(51) Int. Cl.: B60N 2/14, B62D 25/20

(54) **DREHVORRICHTUNG FÜR EINEN FAHRZEUGSITZ**
ROTATING DEVICE FOR A VEHICLE SEAT
DISPOSITIF DE ROTATION POUR UN SIÈGE DE VÉHICULE

(30) Priorität: 12.02.2016 DE 102016102450
(43) Veröffentlichungstag der Anmeldung: 16.08.2017
(73) Patentinhaber: Aguti Produktentwicklung & Design GmbH, 88085 Langenargen (DE)
(72) Erfinder: Grieger, Andreas, 88079 Kressbronn (DE)
(74) Vertreter: Otten, Roth, Dobler & Partner mbB Patentanwälte

(56) Entgegenhaltungen:
- EP-A2- 0 123 988
- DE-A1- 10 163 736
- DE-U1-202011 051 401

## Beschreibung

Die Erfindung betrifft eine Drehvorrichtung für einen Fahrzeugsitz, sowie ein Fahrzeugsitz mit einer Drehvorrichtung.

### Stand der Technik

Eine Drehvorrichtung für einen Fahrzeugsitz der einleitend bezeichneten Art ist in vielfältigen Ausführungsformen bereits bekannt.

In Reisemobilen werden zum Beispiel Fahrzeugsitze eingesetzt, die sich drehen lassen, um den Fahrzeugsitz bei Stillstand des Fahrzeugs in einer anderen Position nutzen zu können. Drehvorrichtungen für diese Fahrzeugsitze sind regelmäßig derart aufgebaut, dass vergleichsweise massive Blechelemente eingesetzt werden, welche zur weiteren Stabilisierung mit Erhebungen und Vertiefungen versehen sind. Diese Blechelemente sind zumeist aus einem vergleichsweise schweren Material, wie z.B. Stahl hergestellt. Eine derartige Drehvorrichtung ist z.B. aus der DE 101 63 736 A1 bekannt.

### Aufgabe und Vorteile der Erfindung

Der Erfindung liegt die Aufgabe zu Grunde, eine Drehvorrichtung für einen Fahrzeugsitz bereitzustellen, welche hinsichtlich auftretender Kräfte, insbesondere Torsionskräfte, stabil ausgebildet ist.

Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einer Drehvorrichtung für einen Fahrzeugsitz aus, die einen Unterbau für ein Bodenteil zur Anbringung an einem Fahrzeugboden und einen Überbau umfasst, an dem ein Sitz anbringbar ist, wobei der Unterbau mit dem Überbau über eine Dreheinheit verbunden ist.

Die Dreheinheit ist beispielsweise als Drehkranz ausgebildet.

Der Kern der Erfindung liegt nun darin, dass der Überbau und/oder der Unterbau plattenförmig ausgestaltet ist und der Überbau und/oder der Unterbau Hohlkammern umfasst.

Durch die Ausgestaltung des Überbaus und/oder des Unterbaus als Hohlkammerplatte, wobei die Platte Kammern bzw. Waben und/oder Poren umfasst, ist eine vergleichsweise hohe Stabilität, insbesondere hinsichtlich auftretender Torsionskräfte, erzielbar. Insbesondere ist durch die Ausgestaltung des Überbaus und/oder des Unterbaus als Hohlkammerplatte eine Gewichtsreduktion der Drehvorrichtung erreicht.

Vorstellbar ist, dass der Überbau und/oder der Unterbau der Drehvorrichtung zumindest zu einem überwiegenden Teil aus einem Metallschaum hergestellt ist.

Bevorzugterweise umfasst der Überbau und/oder der Unterbau eine Vielzahl von Hohlkammer, zum Beispiel mehr als 10, 15 oder 20 Hohlkammern. Insbesondere ist eine überwiegende Anzahl von Hohlkammern annähernd identisch ausgebildet.

Vorteilhafterweise umfasst die Drehvorrichtung ein Rastmittel, mittels welchem der Überbau gegenüber dem Unterbau arretierbar ist. Dadurch kann im montierten Zustand der Drehvorrichtung im Fahrzeug der Fahrzeugsitz zumindest in einer Fahrposition und in einer weiteren Nutzposition fixiert werden.

In einer vorteilhaften Modifikation der Erfindung ist der Überbau und/oder der Unterbau aus einem Strangpress-Profil hergestellt.

Der Überbau und/oder der Unterbau ist vorteilhaft mittels eines Strangpressverfahrens hergestellt. Durch die Verwendung von Strangpress-Profilen für den Überbau und/oder den Unterbau können Fertigungskosten verringert werden.

Vorteilhafterweise besteht der Überbau und/oder der Unterbau zu einem überwiegenden Teil aus Aluminium. Durch die Verwendung von Aluminium ergibt sich eine vergleichsweise hohe Gewichtsreduktion. Insbesondere eignet sich Aluminium vergleichsweise gut, um mittels eines Strangpressverfahrens umgeformt zu werden.

Auch ist es von Vorteil, dass eine Längserstreckung der Hohlkammern parallel zu einer plattenförmigen Deckwand des Überbaus und/oder des Unterbaus verläuft, zum Beispiel an der Ober- und/oder der Unterseite des Überbaus und/oder an der Ober- und/oder der Unterseite des Unterbaus.

Bei einer Herstellung des Überbaus und/oder des Unterbaus mittels des Strangpressverfahrens können Hohlkammern, welche in ihrer Längserstreckung parallel zu einer plattenförmigen Deckwand des Überbaus und/oder des Unterbaus verlaufen, vergleichsweise einfach eingebracht werden.

Weiter wird vorgeschlagen, dass die Dicke einer Trennwand zwischen zwei Hohlkammern im Bereich der Dicke der plattenförmigen Deckwand des Überbaus und/oder des Unterbaus liegt.

Vorteilhafterweise schließt die Deckwand eine Seite einer Hohlkammer ab und bildet damit eine Seitenwand der Hohlkammer. Insbesondere bilden Deckwände die Ober- und Unterseite des Überbaus und/oder des Unterbaus und sind über Wandelemente miteinander verbunden, wobei die Wandelemente die verbleibenden Seitenwände der Hohlkammern bilden.

Überdies ist es bedeutsam, dass die Hohlkammern des Überbaus und/oder des Unterbaus röhrenartig ausgebildet sind.

Bevorzugterweise besitzen die Hohlkammern in einem Querschnitt ein annähernd rundes Profil. Die Hohlkammern umfassen insbesondere entlang einer Längsachse, welche vorteilhaft parallel zur Extrusions-Richtung des Profils gerichtet ist, im Querschnitt ein annähernd rundes Profil.

Durch das annähernd runde Profil kann vergleichsweise einfach ein Gewinde in eine Hohlkammer eingebracht werden.

Die Hohlkammern können im Querschnitt aber auch z.B. dreieckig, rechteckig, vorteilhaft quadratisch, mehreckig, rund und/oder oval gestaltet sein.

Ein weiteres wesentliches Merkmale der Erfindung ist, dass die Hohlkammern des Überbaus und/oder des Unterbaus, insbesondere an schmalen Seitenflächen des Überbaus und/oder des Unterbaus, mittels einer Abdeckung für einen Nutzer nicht sichtbar verdeckt sind.

Hierdurch ist die Drehvorrichtung ästhetisch vorteilhaft ausgestaltet.

Des Weiteren ist es bevorzugt, dass die Abdeckung aus Kunststoff hergestellt ist.

Die Abdeckung kann in einem Spritzguss-Verfahren beispielsweise aus Metall, z.B. Aluminium und/oder Kunststoff, hergestellt sein. Durch die Ausbildung der Abdeckung aus Kunststoff ist eine weitere Gewichtsreduzierung realisierbar. Denkbar ist auch, dass die Abdeckung zumindest teilweise aus Holz hergestellt ist.

Überdies von Vorteil ist, dass am Überbau und/oder am Unterbau ein mechanisch verstärkter Abschnitt vorgesehen ist, vorteilhaft ist im Überbau und/oder im Unterbau ein mechanisch verstärkter Abschnitt vorgesehen. Hierdurch ist die Stabilität der Drehvorrichtung zusätzlich erhöht, insbesondere ist die Drehvorrichtung aufgrund des verstärkten Abschnitts hinsichtlich auftretender Torsionskräfte zusätzlich verstärkt.

Weiter wird vorgeschlagen, dass der verstärkte Abschnitt durch ein Verstärkungselement realisiert ist, wobei das Verstärkungselement in eine Hohlkammer und/oder in eine speziell ausgestaltete Aussparung des Überbaus und/oder des Unterbaus eingelegt ist.

Das Verstärkungselement besteht bevorzugt aus einem vergleichsweise deutlich stabileren Material als der Überbau und/oder der Unterbau, beispielsweise aus einem Metall, z.B. aus Stahl.

Das Verstärkungselement kann parallel zu der plattenartigen Deckwand des Überbaus und/oder des Unterbaus ausgebildet sein. Insbesondere ist das Verstärkungselement in eine Hohlkammer der Platte des Überbaus und/oder des Unterbaus eingesteckt und/oder eingeschraubt.

Das Verstärkungselement ist beispielsweise als Rundstange oder als Vierkantelement, bspw. als Vierkantrohr ausgebildet. Ist das Verstärkungselement als Vierkantrohr ausgebildet, kann es bspw. verdrehsicher in eine entsprechende Hohlkammer oder eine speziell ausgestaltete Aussparung der Platte des Überbaus und/oder des Unterbaus eingesetzt werden.

Es ist überdies vorteilhaft, dass die Drehvorrichtung ein Montageelement umfasst, wobei das Montageelement z.B. zur Anbringung der Drehvorrichtung am Fahrzeug und/oder am Fahrzeugsitz dient.

Das Montageelement kann auch dazu vorgesehen sein, ein weiteres Element der Drehvorrichtung an der Drehvorrichtung anzuordnen. Das Montageelement kann ein Innengewinde und/oder ein Außengewinde umfassen und/oder eine Vertiefung, insbesondere eine Nut und/oder eine Bohrung aufweisen.

Beispielsweise umfasst das Verstärkungselement ein Montageelement.

Vorteilhaft erweist sich auch, dass der Überbau und/oder der Unterbau derart ausgestaltet ist, dass das Montageelement angeordnet werden kann, insbesondere eingeführt werden kann.

Das Montageelement kann in den Überbau und/oder den Unterbau gesteckten und/oder geschoben sein. Vorstellbar ist auch, dass das Montageelement mit dem Überbau und/oder dem Unterbau verschraubt, verklebt, verklemmt, vernietet und/oder verschweißt ist.

Bevorzugterweise besitzt der Überbau und/oder der Unterbau Montageöffnungen. Die Montageöffnungen sind beispielsweise als Durchgangsöffnungen für Verbindungsmittel ausgestaltet, um die Drehvorrichtung über die Montageelemente beispielsweise mit dem Fahrzeugsitz und/oder mit dem Fahrzeugboden zu verbinden. Die Verbindungsmittel sind beispielsweise als Schrauben, Muttern, Gewindestifte, Bolzen und/oder Nieten ausgebildet.

### Beschreibung des Ausführungsbeispiels

Ein Ausführungsbeispiel der Erfindung ist anhand schematischer Zeichnungen nachstehend unter Angabe weiterer Vorteile und Einzelheiten näher erläutert.

Es zeigen:
- Figur 1: eine perspektivische Ansicht von schräg oben auf eine erfindungsgemäße Drehvorrichtung,
- Figur 2: eine perspektivische Ansicht von schräg oben und vorne auf die Drehvorrichtung nach Figur 1, wobei der Überbau zum Unterbau verdreht dargestellt ist,
- Figur 3: eine seitliche Ansicht auf die linke Seite der Drehvorrichtung nach Figur 1 und
- Figur 4: eine Vorderansicht auf die Drehvorrichtung nach Figur 1.

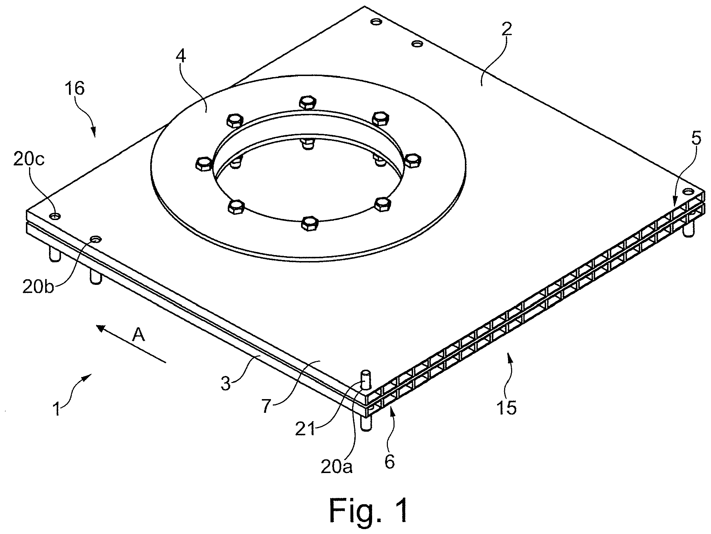

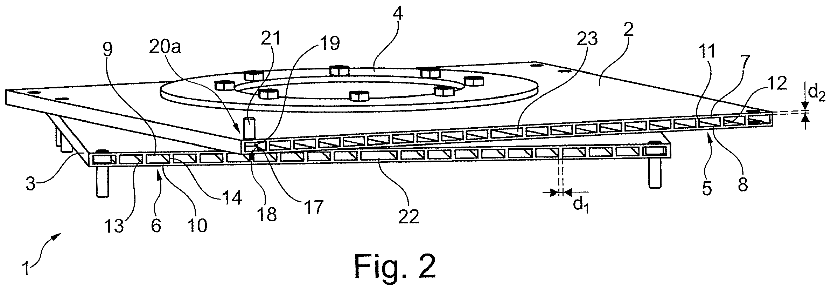

Eine erfindungsgemäße Drehvorrichtung 1 umfasst einen plattenartigen Überbau 2 und einen plattenartigen Unterbau 3, wobei der Überbau 2 mit dem Unterbau 3 über eine Dreheinheit 4 zueinander drehbar verbunden ist (Figuren 1, 2).

Der Überbau 2 und der Unterbau 3 ist z.B. in einem Strangpress-Verfahren beispielsweise aus Aluminium hergestellt. Im Strangpress-Verfahren wurde in den plattenartigen Überbau 2 und den plattenartigen Unterbau 3 Hohlkammern eingebracht.

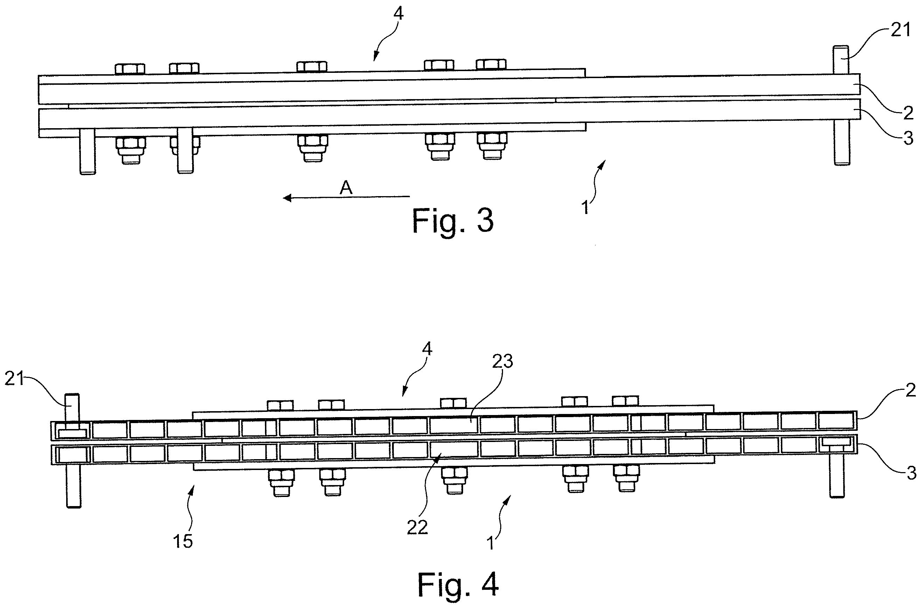

Im Folgenden wird ein Aufbau der Hohlkammern 5, 6 an einem Hohlkammer-Beispiel des Überbaus 2 und des Unterbaus 3 dargelegt. Die Hohlkammern 5, 6 sind im Querschnitt insbesondere rechteckig ausgestaltet, mit zwei vergleichsweise längeren Deckwänden 7, 8 bzw. 9, 10 und zwei vergleichsweise kürzeren Seitenwänden 11, 12 bzw. 13, 14, wobei die längeren Deckwände 7 bis 10 beispielsweise senkrecht zu den kurzen Seitenwänden 11 bis 14 ausgerichtet sind (Figuren 2, 4). Die Deckwände 7 bis 10 können auch gegenüber den Seitenwänden 11 bis 14 einen Winkel ungleich 90° aufweisen. Vorteilhafterweise sind die Deckwände 7, 8 bzw. 9, 10 zueinander parallel ausgerichtet. Insbesondere bilden die Deckwände 7, 8 bzw. 9, 10 jeweils eine plane, z.B. bis auf Durchbrechungen durchgehende Ober- und Unterseite des Überbaus 2 bzw. des Unterbaus 3.

Die Hohlkammern 5, 6 können in ihrer Größe identisch ausgebildet sein. Weiter ist in den Figuren 2, 4 beispielhaft dargestellt, dass die Hohlkammern 5, 6, 22, 23 sich in ihrer Größe auch unterscheiden können. Denkbar ist auch, dass die Hohlkammern 5, 6, 22, 23 derart in ihrer Größe optimiert ausgebildet sind, dass der Überbau 2 bzw. der Unterbau 3 hinsichtlich möglicher auftretenden Belastungen im montierten Zustand größtmögliche Stabilität aufweist. Die Größe und/oder Form der Hohlkammern 5, 6, 22, 23 kann beispielsweise mit Hilfe einer Computersimulation ermittelt sein.

Die Hohlkammern 5, 6, 22, 23 sind insbesondere röhrenartig ausgestaltet und erstrecken sich, insbesondere durchgehend und parallel zu den Deckwänden 7, 8 bzw. 9, 10, von einer Frontseite 15 des Überbaus 2 bzw. des Unterbaus 3 in Richtung A beispielsweise bis zu einer Rückseite 16 des Überbaus 2 bzw. des Unterbaus 3. An der Frontseite 15 und an der Rückseite 16 des Überbaus 2 bzw. des Unterbaus 3 weisen die Hohlkammern 5, 6, 22, 23 insbesondere aufgrund des Herstellungsverfahrens, kein Wandelement auf. Die Hohlkammern an der Frontseite 15 bzw. an der Rückseite 16 des Überbaus 2 und/oder Unterbaus 3 können durch eine Abdeckung (nicht gezeigt) verschlossen sein.

Die Deckwände 7 bis 10 und die Seitenwände 11 bis 14 besitzen beispielsweise die gleiche Wandstärke d1, d2. Vorstellbar ist auch, dass sich die Wandstärke d2 der Wände 7 bis 10 gegenüber der Wandstärke d1 der Seitenwände 11 bis 14 unterscheidet. Auch ist es denkbar, dass sie Seitenwände 11 bis 14 unterschiedliche Dicken aufweisen.

Zur Verstärkung und Verbesserung der Stabilität können im Überbau 2 sowie im Unterbau 3 Verstärkungselemente in Form z.B. eines Vierkantelements 17 zum Beispiel aus Stahl in eine Hohlkammer 18 eingebracht sein. Das Vierkantelement 17 kann sich hierbei insbesondere durchgehend von der Frontseite 15 bis zur Rückseite 16 des Überbaus 2 erstrecken (nicht gezeigt).

Am Vierkantelement 17 können Montageelemente von z.B. in Form eines Innengewindes 19 vorhanden sein. Zur Befestigung eines Fahrzeugsitzes (nicht gezeigt) am Überbau 2 ist z.B. in das Innengewinde 19 des Vierkantelements 17 über eine Montageöffnung, welche bspw. als Bohrung 20a, 20b, 20c an der Deckwand 7 des Überbaus 2 ausgebildet ist, ein Verbindungsmittel in Form eines Gewindestifts 21 eingebracht.

Eine Rotationsachse der Dreheinheit 4 ist vorteilhaft senkrecht zum Überbau 2 bzw. zum Unterbau 3 angeordnet, insbesondere steht die Rotationsachse senkrecht auf den Deckwänden 7 bis 10. Vorteilhafterweise fällt die Rotationsachse der Dreheinheit 4 nicht mit einer Symmetrieachse des Überbaus 2 bzw. des Unterbaus 3 zusammen. Die Dreheinheit 4 kann in verschiedenen Ausführungsformen ausgestaltet sein.

### Bezugszeichenliste

- 1: Drehvorrichtung
- 2: Überbau
- 3: Unterbau
- 4: Dreheinheit
- 5: Hohlkammer
- 6: Hohlkammer
- 7: Deckwand
- 8: Deckwand
- 9: Deckwand
- 10: Deckwand
- 11: Seitenwand
- 12: Seitenwand
- 13: Seitenwand
- 14: Seitenwand
- 15: Frontseite
- 16: Rückseite
- 17: Vierkantelement
- 18: Hohlkammer
- 19: Innengewinde
- 20a: Bohrung
- 20b: Bohrung
- 20c: Bohrung
- 21: Gewindestift
- 22: Hohlkammer
- 23: Hohlkammer

## Patentansprüche

1. Drehvorrichtung (1) für einen Fahrzeugsitz, die einen Unterbau (3) für ein Bodenteil zur Anbringung an einem Fahrzeugboden und einen Überbau (2) umfasst, an dem ein Sitz anbringbar ist, wobei der Unterbau (3) mit dem Überbau (2) über eine Dreheinheit (4) verbunden ist, wobei der Überbau (2) und/oder der Unterbau (3) plattenförmig ausgestaltet ist und der Überbau (2) und/oder der Unterbau (3) Hohlkammern (5, 6, 18, 22, 23) umfasst, **dadurch gekennzeichnet, dass** der Überbau und/oder der Unterbau mehr als 5 Hohlkammern umfasst.

2. Drehvorrichtung (1) für einen Fahrzeugsitz nach dem Anspruch 1, **dadurch gekennzeichnet, dass** der Überbau (2) und/oder der Unterbau (3) aus einem Strangpress-Profil hergestellt ist.

3. Drehvorrichtung (1) für einen Fahrzeugsitz nach einem der vorangegangenen Ansprüche, **dadurch gekennzeichnet, dass** eine Längserstreckung der Hohlkammern (5, 6, 18, 22, 23) parallel zu einer plattenförmigen Deckwand (7 - 10) des Überbaus (2) und/oder des Unterbaus (3) verläuft.

4. Drehvorrichtung (1) für einen Fahrzeugsitz nach einem der vorangegangenen Ansprüche, **dadurch gekennzeichnet, dass** die Dicke einer Trennwand (11 - 14) zwischen zwei Hohlkammern (5, 6, 18, 22, 23) im Bereich der Dicke der plattenförmigen Deckwand (7 - 10) des Überbaus (2) und/oder des Unterbaus (3) liegt.

5. Drehvorrichtung (1) für einen Fahrzeugsitz nach einem der vorangegangenen Ansprüche, **dadurch gekennzeichnet, dass** die Hohlkammern (5, 6, 18, 22, 23) des Überbaus (2) und/oder des Unterbaus (3) röhrenartig ausgebildet sind.

6. Drehvorrichtung (1) für einen Fahrzeugsitz nach einem der vorangegangenen Ansprüche, **dadurch gekennzeichnet, dass** die Hohlkammern (5, 6, 18, 22, 23) des Überbaus (2) und/oder des Unterbaus (3), insbesondere an schmalen Seitenflächen des Überbaus (2) und/oder des Unterbaus (3), mittels einer Abdeckung für einen Nutzer nicht sichtbar verdeckt sind.

7. Drehvorrichtung (1) für einen Fahrzeugsitz nach einem der vorangegangenen Ansprüche, **dadurch gekennzeichnet, dass** die Abdeckung aus Kunststoff hergestellt ist.

8. Drehvorrichtung (1) für einen Fahrzeugsitz nach einem der vorangegangenen Ansprüche, **dadurch gekennzeichnet, dass** am Überbau (2) und/oder am Unterbau (3) ein mechanisch verstärkter Abschnitt vorgesehen ist.

9. Drehvorrichtung (1) für einen Fahrzeugsitz nach dem vorangegangenen Anspruch 8, **dadurch gekennzeichnet, dass** der verstärkte Abschnitt durch ein Verstärkungselement (17) realisiert ist, wobei das Verstärkungselement (17) in eine Hohlkammer (5, 6, 18, 22, 23) und/oder in eine speziell ausgestaltete Aussparung des Überbaus (2) und/oder des Unterbaus (3) eingelegt ist.

10. Drehvorrichtung (1) für einen Fahrzeugsitz nach einem der vorangegangenen Ansprüche, **dadurch gekennzeichnet, dass** die Drehvorrichtung (1) ein Montageelement (19) umfasst, wobei das Montageelement (19) z.B. zur Anbringung der Drehvorrichtung (1) am Fahrzeug und/oder am Fahrzeugsitz dient.

11. Drehvorrichtung (1) für einen Fahrzeugsitz nach dem vorangegangenen Anspruch 10, **dadurch gekennzeichnet, dass** der Überbau (2) und/oder der Unterbau (3) derart ausgestaltet ist, dass das Montageelement (19) angeordnet werden kann, insbesondere eingeführt werden kann.

12. Fahrzeugsitz mit einer Drehvorrichtung (1) nach einem der vorangegangenen Ansprüche.

## Claims

1. Rotating device (1) for a vehicle seat, comprising a substructure (3) for a floor section for affixing to a vehicle floor and a superstructure (2), to which a seat can be affixed, wherein the substructure (3) is connected with the superstructure (2) via a rotating unit (4), wherein the superstructure (2) and/or the substructure (3) is of a plate-shaped design and the superstructure (2) and/or the substructure (3) comprises hollow chambers (5, 6, 18, 22, 23), **characterised in that** the superstructure and/or the substructure comprise more than 5 hollow chambers.

2. Rotating device (1) for a vehicle seat according to claim 1, **characterised in that** the superstructure (2) and/or the substructure (3) is manufactured from an extrusion moulding profile.

3. Rotating device (1) for a vehicle seat according to one of the preceding claims, **characterised in that** a longitudinal expansion of the hollow chambers (5, 6, 18, 22, 23) runs parallel to a plate-shaped cover wall (7 - 10) of the superstructure (2) and/or the substructure (3).

4. Rotating device (1) for a vehicle seat according to one of the preceding claims, **characterised in that** the thickness of a separating wall (11 - 14) between two hollow chambers (5, 6, 18, 22, 23) lies in the area of the thickness of the plate-shaped cover wall (7 - 10) of the superstructure (2) and/or the substructure (3).

5. Rotating device (1) for a vehicle seat according to one of the preceding claims, **characterised in that** the hollow chambers (5, 6, 18, 22, 23) of the superstructure (2) and/or the substructure (3) are of a tubular design.

6. Rotating device (1) for a vehicle seat according to one of the preceding claims, **characterised in that** the hollow chambers (5, 6, 18, 22, 23) of the superstructure (2) and/or the substructure (3), in particular on small side areas of the superstructure (2) and/or the substructure (3), are covered by means of a cover to be invisible to a user.

7. Rotating device (1) for a vehicle seat according to one of the preceding claims, **characterised in that** the cover is manufactured of plastic.

8. Rotating device (1) for a vehicle seat according to one of the preceding claims, **characterised in that** a mechanically reinforced section is envisaged on the superstructure (2) and/or on the substructure (3).

9. Rotating device (1) for a vehicle seat according to preceding claim 8, **characterised in that** the reinforced section is realised by a reinforcement element (17), wherein the reinforcement element (17) is inserted into a hollow chamber (5, 6, 18, 22, 23) and/or into a specially designed recess in the superstructure (2) and/or the substructure (3).

10. Rotating device (1) for a vehicle seat according to one of the preceding claims, **characterised in that** the rotating device (1) comprises an assembly element (19), wherein the assembly element (19) for example serves for fitting the rotating device (1) to the vehicle and/or to the vehicle seat.

11. Rotating device (1) for a vehicle seat according to preceding claims 10, **characterised in that** the superstructure (2) and/or the substructure (3) is designed in such a way that the assembly element (19) can be arranged, in particular inserted.

12. Vehicle seat with a rotating device (1) according to one of the preceding claims.

## Revendications

1. Dispositif de rotation (1) pour un siège de véhicule, qui comprend une structure inférieure (3) pour une partie de plancher destinée à être fixée à un plancher de véhicule, et une structure supérieure (2) sur laquelle peut être fixé un siège, la structure inférieure (3) étant reliée à la structure supérieure (2) par l'intermédiaire d'une unité de rotation (4), la structure supérieure (2) et/ou la structure inférieure (3) ayant une forme de plaque, et la structure supérieure (2) et/ou la structure inférieure (3) comprenant des cavités (5, 6, 18, 22, 23), **caractérisé en ce que** la structure supérieure et/ou la structure inférieure comprennent plus de 5 cavités.

2. Dispositif de rotation (1) pour un siège de véhicule selon la revendication 1, **caractérisé en ce que** la structure supérieure (2) et/ou la structure inférieure (3) sont constituées d'un profilé extrudé.

3. Dispositif de rotation (1) pour un siège de véhicule selon l'une des revendications précédentes, **caractérisé en ce qu'**une extension longitudinale des cavités (5, 6, 18, 22, 23) s'étend parallèlement à une paroi de parement (7 - 10) en forme de plaque de la structure supérieure (2) et/ou de la structure inférieure (3).

4. Dispositif de rotation (1) pour un siège de véhicule selon l'une des revendications précédentes, **caractérisé en ce que** l'épaisseur d'une paroi de séparation (11-14) entre deux cavités (5, 6, 18, 22, 23) se situe dans la gamme de l'épaisseur de la paroi de parement (7 - 10) en forme de plaque de la structure supérieure (2) et/ou de la structure inférieure (3).

5. Dispositif de rotation (1) pour un siège de véhicule selon l'une des revendications précédentes, **caractérisé en ce que** les cavités (5, 6, 18, 22, 23) de la structure supérieure (2) et/ou de la structure inférieure (3) sont conçues en forme tubulaire.

6. Dispositif de rotation (1) pour un siège de véhicule selon l'une des revendications précédentes, **caractérisé en ce que** les cavités (5, 6, 18, 22, 23) de la structure supérieure (2) et/ou de la structure inférieure (3) sont recouvertes au moyen d'un cache pour être dissimulées à un utilisateur, en particulier sur des surfaces latérales étroites de la structure supérieure (2) et/ou de la structure inférieure (3).

7. Dispositif de rotation (1) pour un siège de véhicule selon l'une des revendications précédentes, **caractérisé en ce que** le cache est fabriqué en matière plastique.

8. Dispositif de rotation (1) pour un siège de véhicule selon l'une des revendications précédentes, **caractérisé en ce qu'**une section renforcée mécaniquement est prévue sur la structure supérieure (2) et/ou sur la structure inférieure (3).

9. Dispositif de rotation (1) pour un siège de véhicule selon la revendication 8 précédente, **caractérisé en ce que** la section renforcée est réalisée par un élément de renfort (17), l'élément de renfort (17) étant inséré dans une cavité (5, 6, 18, 22, 23) et/ou dans un évidement spécialement conçu de la structure supérieure (2) et/ou de la structure inférieure (3).

10. Dispositif de rotation (1) pour un siège de véhicule selon l'une des revendications précédentes, **caractérisé en ce que** le dispositif de rotation (1) comprend un élément de montage (19), lequel élément de montage (19) sert par exemple à fixer le dispositif de rotation (1) au véhicule et/ou au siège du véhicule.

11. Dispositif de rotation (1) pour un siège de véhicule selon la revendication 10 précédente, **caractérisé en ce que** la structure supérieure (2) et/ou la structure inférieure (3) sont conçues de telle sorte que l'élément de montage (19) peut y être disposé, en particulier peut y être inséré.

12. Siège de véhicule avec dispositif de rotation (1) selon l'une des revendications précédentes.
